# EUROPEAN PATENT APPLICATION

(11) **EP 2 878 360 A1**
(43) Date of publication of application: **03.06.2015**
(21) Application number: 14194834.9
(22) Date of filing: 26.11.2014
(51) Int. Cl.: B01D 53/94, F01N 3/20

(54) **Exhaust gas purification catalyst**

(30) Priority: 29.11.2013 JP 2013247876
(71) Applicant: Toyota Jidosha Kabushiki Kaisha, Toyota-shi, Aichi-ken 471-8571 (JP)
(72) Inventor: Shimmyo, Yusuke, Toyota-shi, Aichi-ken 471-8571 (JP); Sobue, Yuichi, Toyota-shi, Aichi-ken 471-8571 (JP)
(74) Representative: Intès, Didier Gérard André

(57) **Abstract**

An exhaust gas purification catalyst contains a substrate (1) that forms a gas passage through which an exhaust gas flows, a lower catalyst layer (2) that is formed on a surface of the substrate, a front upper catalyst layer (3) that coats an upstream side, in a direction of gas flow, of a surface of the lower catalyst layer, and a rear upper catalyst layer (4) that coats the downstream side of the front upper catalyst layer, in the direction of gas flow, of the surface of the lower catalyst layer. The front upper catalyst layer (3) and the rear upper catalyst layer (4) are disposed adjacent to one another; the lower catalyst layer (2) contains an NOx reduction catalyst; the front upper catalyst layer (3) contains an NOx reduction catalyst; and the rear upper catalyst layer (4) contains an oxidation catalyst.

## Description

### BACKGROUND OF THE INVENTION

### 1. Field of the Invention

The invention relates to an exhaust gas purification catalyst and specifically relates to an exhaust gas purification catalyst formed on the surface of a substrate that itself forms a gas passage through which an exhaust gas flows.

### 2. Description of Related Art

Exhaust gas control devices that contain an NOx catalyst for the reduction of the nitrogen oxides (NOx) present in exhaust gases are generally available for the exhaust gas control devices disposed in the exhaust systems of internal combustion engines, for example, diesel engines. Various types are available for this NOx catalyst, among which selective reduction-type NOx catalysts (selective catalytic reduction (SCR) (referred to below as SCR catalysts), which reductively remove the NOx through the addition of a reducing agent, are available. Urea is a conventional reducing agent, and generally aqueous urea (an aqueous urea solution) is supplied by spraying into the exhaust gas upstream from the catalyst. Ammonia is produced from the aqueous urea due to the thermal inputs from the exhaust gas and catalyst, and the NOx is reduced on the SCR catalyst by this ammonia.

An optimal range exists for the amount of addition of such a reducing agent. When the amount of reducing agent addition exceeds the optimal range and is in excess, excess ammonia then flows through the SCR catalyst (ammonia slip). In order for the ammonia that leaks out of the SCR catalyst in this manner to be purified by an oxidation treatment, an oxidation catalyst, that is, an ammonia slip catalyst (ASC), may be disposed downstream from the SCR.

SCR systems in which ammonia or an ammonia precursor compound can be added to the exhaust by an injector are described in US 2006/0039843 A1 and US 2009/0104096 A1. In US 2006/0039843 A1, an exhaust gas control system is described that has a catalyst substrate in which an SCR catalytically active coating is disposed upstream (inlet zone) and an ammonia decomposition catalyst coating is disposed downstream (outlet zone). It is taught that a vanadium-containing SCR catalyst and/or a zeolite base is preferably used as the SCR catalyst. It is also taught that an ammonia decomposition catalyst containing 0.1 to 10 g/ft³ of a Pt group metal and further containing Ce is preferably used as the ammonia decomposition catalyst. Thus, the exhaust gas purification catalysts described in US 2006/0039843 A1 and US 2009/0104096 A1 are partitioned into and zone coated with an ammonia decomposition function based on a Pt group metal and an NOx reduction function.

However, when the ammonia is decomposed (oxidized) using a Pt group metal-based ammonia decomposition catalyst, the ammonia is not completely decomposed into nitrogen and water and NOx is produced (refer to FIG. 1). Thus, the exhaust gas purification catalysts described in US 2006/0039843 A1 and US 2009/0104096 A1, while being capable of carrying out ammonia decomposition, are unable to carry out a complete purification into harmless components.

An exhaust gas purification catalyst capable of effectively decomposing ammonia is thus required.

### SUMMARY OF THE INVENTION

The invention provides an exhaust gas purification catalyst that is capable of effectively decomposing ammonia.

The inventors discovered that, with respect to an exhaust gas purification catalyst that is formed on the surface of a substrate that itself forms a gas passage through which the exhaust gas flows, a high ammonia decomposition efficiency can be imparted to the exhaust gas purification catalyst by a special disposition of a layer containing an NOx reduction catalyst and a layer containing an oxidation catalyst.

An aspect of the invention relates to an exhaust gas purification catalyst that contains a substrate that forms a gas passage through which an exhaust gas flows, a lower catalyst layer that is formed on a surface of the substrate, a front upper catalyst layer that coats an upstream side, in a direction of gas flow, of a surface of the lower catalyst layer, and a rear upper catalyst layer that coats the downstream side of the front upper catalyst layer, in the direction of gas flow, of the surface of the lower catalyst layer. The front upper catalyst layer and the rear upper catalyst layer are disposed adjacent to one another; the lower catalyst layer includes an NOx reduction catalyst; the front upper catalyst layer includes an NOx reduction catalyst; and the rear upper catalyst layer includes an oxidation catalyst.

The front upper catalyst layer and the lower catalyst layer may be formed integrally as a single body.

The percentage for the length of the rear upper catalyst layer relative to the length of the lower catalyst layer may be 20 to 70%.

The sum of thicknesses of an upper catalyst layer and the lower catalyst layer may be 20 to 70 µm.

In the oxidation catalyst, at least one precious metal selected from Pt and Pd may be supported on a first support that contains a first porous body.

In the NOx reduction catalyst, at least one selection from Cu and Fe may be supported on a second support that contains a second porous body.

The catalyst of the invention makes possible a highly efficient decomposition of the ammonia present in an exhaust gas. The catalyst of the invention can also efficiently detoxify the ammonia present in an exhaust gas.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a graph that shows the oxidation products when the oxidation reaction of ammonia is carried out with a Pt group-containing catalyst;
FIG. 2A is a diagram that describes the inhibition of ammonia release by an exhaust gas purification catalyst of an embodiment of the invention at low temperatures for the catalyst inlet temperature;
FIG. 2B is a diagram that describes the inhibition of ammonia and NOx release by an exhaust gas purification catalyst of an embodiment of the invention at medium-to-high temperatures for the catalyst inlet temperature;
FIG. 3 shows an embodiment of the exhaust gas purification catalyst of the invention;
FIG. 4 shows a preferred honeycomb-shaped substrate for forming the exhaust gas purification catalyst of embodiments of the invention;
FIG. 5 is a diagram that compares the maximum NOx emission concentration for the zone coating of an oxidation catalyst as the rear upper catalyst layer (Example 1) with the zone coating of an oxidation catalyst as the front upper catalyst layer (Comparative Example 1);
FIG. 6 is a graph that shows the relationship between the percentage for the length of the rear upper catalyst layer relative to the length of the lower catalyst layer (Examples 1 to 3) and the 50% ammonia decomposition temperature and the maximum NOx emission concentration; and

FIG. 7 is an optical microscope photomicrograph of the catalyst of Example 1.

### DETAILED DESCRIPTION OF EMBODIMENTS

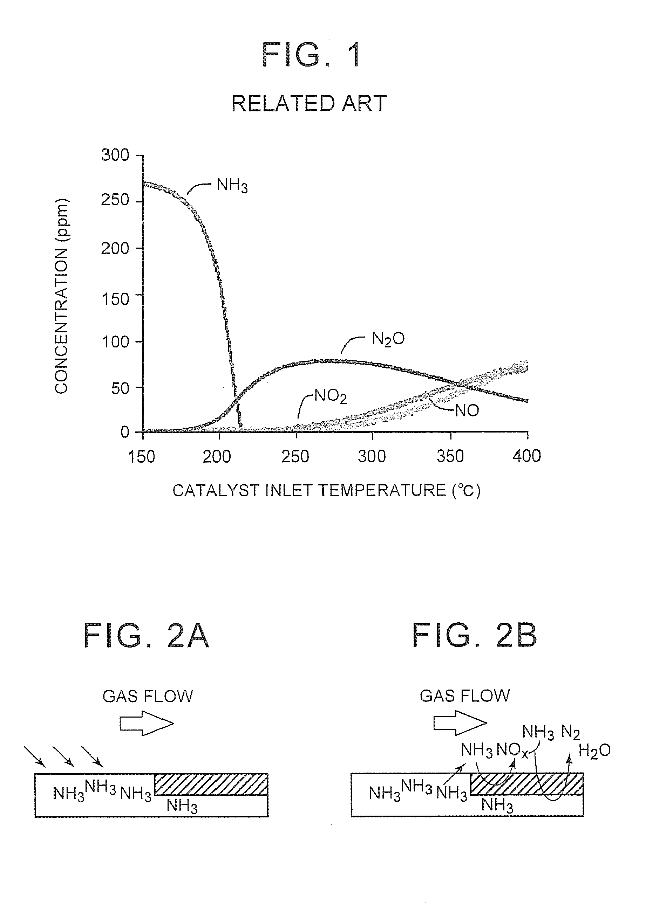

The exhaust gas purification catalyst according to embodiments of the invention (also referred to below as the "catalyst according to these embodiments") is constructed from a substrate, a lower catalyst layer that is formed on a surface of the substrate, a front upper catalyst layer that coats an upstream side, in the direction of gas flow, of a surface of the lower catalyst layer, and a rear upper catalyst layer that coats a downstream side of the front upper catalyst layer, in the direction of gas flow, of the surface of the lower catalyst layer. The front upper catalyst layer and the rear upper catalyst layer are disposed adjacent to one another. In addition, the lower catalyst layer includes an NOx reduction catalyst; the front upper catalyst layer includes an NOx reduction catalyst; and the rear upper catalyst layer includes an oxidation catalyst. Due to this structure, during the occurrence of low temperatures for the catalyst inlet temperature, the catalyst according to these embodiments can suppress the release of ammonia because the ammonia is adsorbed by the front upper catalyst layer and/or the lower catalyst layer (refer to FIG. 2A). Moreover, during the occurrence of medium-to-high temperatures for the catalyst inlet temperature, this adsorbed ammonia and the ammonia in the exhaust gas are oxidized at the rear upper catalyst layer, while the produced NOx is converted to nitrogen and water through a selective reduction - at the lower catalyst layer and particularly the lower catalyst layer disposed below the rear upper catalyst layer - by the adsorbed ammonia and the ammonia present in the exhaust gas. Ammonia release can thus be suppressed (refer to FIG. 2B). Here, low temperatures correspond to the temperatures during the start-up of an internal combustion engine or when it is stopped, and denote less than 200°C and particularly 100 to 180°C, while medium-to-high temperatures correspond to the temperatures during the ordinary operation of an internal combustion engine, and denote equal to or greater than 200°C and particularly 200 to 500°C.

The front upper catalyst layer and the rear upper catalyst layer are disposed adjacent to one another in the catalyst according to these embodiments. Here, "disposed adjacent to one another" means that the front upper catalyst layer is in contact with the rear upper catalyst layer, or, if they are separated from one another, that the front upper catalyst layer and the rear upper catalyst layer are disposed such that the Ammonia adsorbed in the front upper catalyst layer can migrate to the rear upper catalyst layer during the occurrence of medium-to-high temperatures. In the latter case, the gap between the front upper catalyst layer and the rear upper catalyst layer is less than 6.35 mm and is preferably from 0.5 to 6 mm and particularly preferably from 0.5 to 3 mm. The upstream end of the front upper catalyst layer is disposed flush with the upstream end of the lower catalyst layer. The region on the upstream side of the rear upper catalyst layer may be stacked with the region on the downstream side of the front upper catalyst layer. In this case, either of the front upper catalyst layer and the rear upper catalyst layer may be the upper side. When a preferential functioning is desired for the front upper catalyst layer, the region on the downstream side of the front upper catalyst layer may then be coated on the region on the upstream side of the rear upper catalyst layer; when a preferential functioning is desired for the rear upper catalyst layer, the region on the upstream side of the rear upper catalyst layer may then be coated on the region on the downstream side of the front upper catalyst layer.

The downstream end of the rear upper catalyst layer is preferably disposed flush with the downstream end of the lower catalyst layer in the catalyst according to these embodiments. In addition, the upstream end of the front upper catalyst layer is preferably disposed flush with the upstream end of the lower catalyst layer.

Viewed from the perspective of bringing about large amounts of NH₃ adsorption in order to suppress slip, the NOx reduction catalyst of the lower catalyst layer and the NOx reduction catalyst of the front upper catalyst layer are preferably the same in the catalyst according to these embodiments. In addition, viewed from the perspective of dividing the materials into a material that provides an excellent adsorption and a material that provides an excellent reduction in order to bring about an improvement in the SCR reaction rate between the adsorbed NH₃ and the NOx in the exhaust gas, the NOx reduction catalyst in the lower catalyst layer is preferably different from the NOx reduction catalyst in the front upper catalyst layer in the catalyst according to these embodiments.

Viewed from the perspective of the resistance to debonding or delamination, the NOx reduction catalyst of the lower catalyst layer and the NOx reduction catalyst of the front upper catalyst layer preferably form a single body in the catalyst according to these embodiments.

Considering the balance between the inhibition of oxidation catalyst-induced NOx production and the inhibition of ammonia release, the percentage for the length of the rear upper catalyst layer relative to the length of the lower catalyst layer is preferably 20 to 70%, more preferably 30 to 65%, and particularly preferably 40 to 50% in the catalyst according to these embodiments.

The sum of the thicknesses of an upper catalyst layer and the lower catalyst layer, viewed from the perspective of the responsiveness to heat, is preferably 20 to 70 µm, more preferably 28 to 65 µm, and particularly preferably 30 to 60 µm in the catalyst according to these embodiments. Here, the thickness of the catalyst layer refers to the average thickness of the catalyst layer coating the surface of the substrate.

The NOx reduction catalyst used in the catalyst according to these embodiments should have the ability to adsorb ammonia and selectively reduce NOx with ammonia (SCR), but is not otherwise particularly limited. However, NOx reduction catalysts in which at least one selection from Cu and Fe is supported on a support containing a porous body are preferred for their efficiency in the SCR reaction and for the binding strength of the ion-exchange-supported metal. Catalytic metals other than Cu and Fe, e.g., lithium, magnesium, titanium, zirconium, vanadium, chromium, manganese, iron, cobalt, nickel, palladium, copper, zinc, gallium, germanium, arsenic, tin, calcium, and boron, may be incorporated to the extent that they do not interfere with the performance of the Cu and Fe. Loading techniques such as adsorptive loading or water absorption loading can be used as the method for supporting the Cu or Fe in the porous body-containing support.

The porous body-containing support should be able to adsorb ammonia at low temperatures and desorb the adsorbed ammonia at medium-to-high temperatures, but is not otherwise particularly limited. It can be specifically exemplified by alumina, silica, zirconia, silica-alumina, and zeolite. Among the preceding, the use of an aluminosilicate or silicoaluminophosphate for the zeolite is preferred in particular. The aluminosilicate can be exemplified by MFI-type zeolites, MEL-type zeolites, FER-type zeolites, MOR-type zeolites, CHA-type zeolites, and TON-type zeolites. Although not intended as a particular limitation, the use of MFI-type zeolites is preferred and the use of ZSM-5-type zeolite is particularly preferred. The ratio between Si and Al in the aluminosilicate is not particularly limited, but, viewed in terms of maintaining the activity of the catalyst, SiO₂/Al₂O₃ (molar ratio) is preferably 20 to 1000 and is particularly preferably 30 to 400. This SiO₂/Al₂O₃ (molar ratio) can be measured using conventional methods. An example is the method in which the aluminosilicate is dissolved in an aqueous alkali solution and analysis is carried out by plasma atomic emission spectroscopic analysis. The silicoaluminophosphate can be exemplified by SAPO-5, SAPO-11, SAPO-14, SAPO-17, SAPO-18, SAPO-34, SAPO-39, and SAPO-42. While not intended as a particular limitation, the use is preferred of silicoaluminophosphates that have a pore entrance defined by an 8-membered oxygen ring; the use of chabazite-type silicoaluminophosphates is more preferred; and the use of SAPO-34 is particularly preferred.

The oxidation catalyst used in the catalyst according to these embodiments should be able to oxidize ammonia but is not otherwise particularly limited; however, when viewed from the standpoint of the ammonia oxidation efficiency, an oxidation catalyst is preferred in which at least one precious metal selected from Pt and Pd is supported on a porous body-containing support. When both Pt and Pd are incorporated, the Pt and Pd are preferably loaded at the same time. Besides Pt and Pd, another catalytic precious metal, such as Rh, may be incorporated insofar as the performance of the Pt and Pd is not impaired. Loading techniques such as adsorptive loading or water absorption loading can be used as the method for supporting the Pt or Pd in the porous body-containing support.

The porous body-containing support should be able to provide an adequate supply of ammonia to the Pt and/or Pd, which are the active sites, but is not otherwise particularly limited. It can be specifically exemplified by alumina, silica, zirconia, silica-alumina, and zeolite. Among the preceding, the use of an aluminosilicate or silicoaluminophosphate for the zeolite is preferred in particular. The aluminosilicate can be exemplified by MFI-type zeolites, MEL-type zeolites, FER-type zeolites, MOR-type zeolites, CHA-type zeolites, and TON-type zeolites. Although not intended as a particular limitation, the use of MFI-type zeolites is preferred and the use of ZSM-5-type zeolite is particularly preferred. The ratio between Si and Al in the aluminosilicate is not particularly limited, but, viewed in terms of maintaining the activity of the catalyst, SiO₂/Al₂O₃ (molar ratio) is preferably 20 to 1000 and is particularly preferably 30 to 400. This SiO₂/Al₂O₃ (molar ratio) can be measured using conventional methods. An example is the method in which the aluminosilicate is dissolved in an aqueous alkali solution and analysis is carried out by plasma atomic emission spectroscopic analysis. The silicoaluminophosphate can be exemplified by SAPO-5, SAPO-11, SAPO-14, SAPO-17, SAPO-18, SAPO-34, SAPO-39, and SAPO-42. While not intended as a particular limitation, the use is preferred of silicoaluminophosphates that have a pore entrance defined by an 8-membered oxygen ring; the use of chabazite-type silicoaluminophosphates is more preferred; and the use of SAPO-34 is particularly preferred.

Viewed from the perspective of the catalyst warm-up behavior, the coating amount for the lower catalyst layer in the catalyst according to these embodiments is preferably 20 to 200 g per 1 liter of substrate and is more desirably 25 to 150 g per 1 liter of substrate. Here, the "coating amount" refers to "the mass provided by converting the mass of the lower catalyst layer coated on the substrate surface, to the mass of the lower catalyst layer coated in 1 liter of substrate". 1 liter of substrate denotes "1 liter of the bulk volume of the entire article that also includes the volume of the space formed within the substrate in the net volume of the substrate".

Viewed in terms of the gas diffusivity and the catalyst warm-up behavior, the coating amount for the front upper catalyst layer in the catalyst according to these embodiments is preferably 20 to 200 g per 1 liter of substrate and is more desirably 25 to 150 g per 1 liter of substrate.

Viewed in terms of the gas diffusivity and the catalyst warm-up behavior, the coating amount for the rear upper catalyst layer in the catalyst according to these embodiments is preferably 20 to 200 g per 1 liter of substrate and is more desirably 25 to 150 g per 1 liter of substrate.

The catalyst according to these embodiments is formed on a surface of a substrate that itself forms gas passages through which the exhaust gas flows.

This substrate has a structure that has gas passages, and, for example, a substrate that has a honeycomb, foam, or plate configuration may be used. The cross section of the substrate can have any shape, e.g., circular, elliptical, polyhedral, and so forth. A conventional material, e.g., a ceramic such as cordierite or SiC, or a metal, and so forth, can be used as the material of the substrate without particular limitation. The substrate is preferably a honeycomb-shaped porous sinter that has a plurality of cell passages. The number and size of the individual cell passages is not particularly limited and may be selected as appropriate in correspondence to the required properties. For example, in the case of use as an automotive exhaust gas purification catalyst, the cell density is preferably in the range from 300 to 1200 cells/inch² and the partition wall thickness is preferably 10 to 200 µm. The shape of the cell cross section may be any shape, e.g., circular or polygonal such as square, hexahedral, and so forth. The shape of the cell cross section refers to the cross section provided by cutting a cell passage that extends in a prescribed direction wherein cutting is performed in the direction orthogonal to the prescribed direction.

With regard to the formation of the lower catalyst layer on the surface of the substrate, the substrate surface may be washcoated with a slurry containing the support in powder form and the catalytic metal may then be supported thereon, or a catalyst powder - prepared by preliminarily supporting the catalytic metal on a powder of the support - may be made into a slurry and this may be washcoated on the substrate surface.

With regard to the formation of the front upper catalyst layer on the surface of the lower catalyst layer, the upstream region of the surface of the lower catalyst layer may be washcoated with a slurry containing the support in powder form and the catalytic metal may then be supported thereon, or a catalyst powder - prepared by preliminarily supporting the catalytic metal on a powder of the support - may be made into a slurry and this may be washcoated on the upstream region of the surface of the lower catalyst layer.

With regard to the formation of the rear upper catalyst layer on the surface of the lower catalyst layer, the downstream region of the surface of the lower catalyst layer may be washcoated with a slurry containing the support in powder form and the catalytic metal may then be supported thereon, or a catalyst powder - prepared by preliminarily supporting the catalytic metal on a powder of the support - may be made into a slurry and this may be washcoated on the downstream region of the surface of the lower catalyst layer.

When the front upper catalyst layer and the lower catalyst layer form a single body, the catalyst layers may be formed on the surface of the substrate as follows: a slurry may be washcoated on the substrate to form a catalyst layer, and the downstream region of this substrate may be dipped in a precious metal reagent solution in order to soak up and support the precious metal component and thereby form the rear upper catalyst layer.

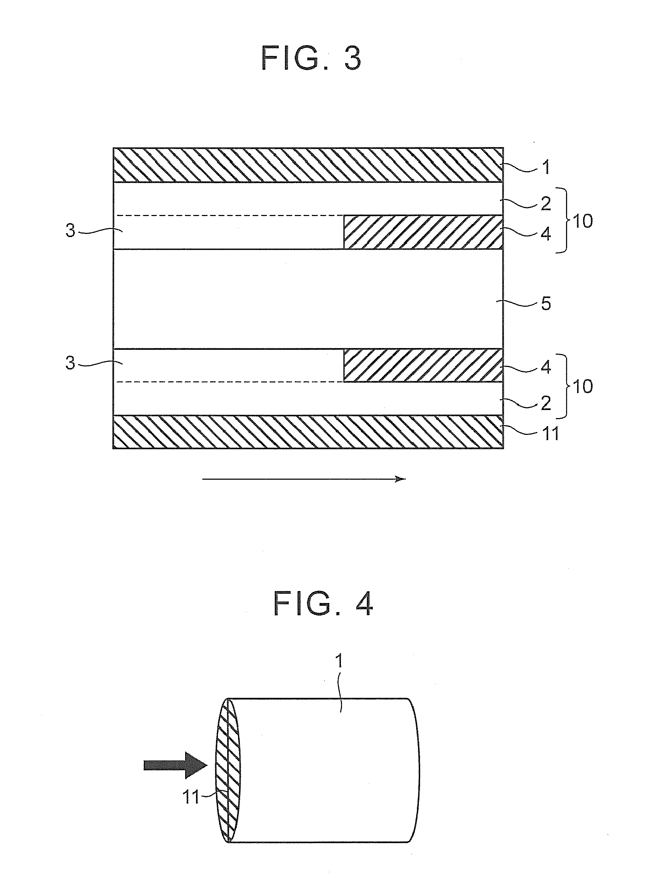

An embodiment of the catalyst according to the invention is shown in FIG. 3. A catalyst layer 10 is constructed of a lower catalyst layer 2, which is formed on a surface of a substrate 1; a front upper catalyst layer 3, which is formed on the upstream region of the surface of the lower catalyst layer 2; and a rear upper catalyst layer 4, which is formed on the downstream region of the surface of the lower catalyst layer 2. The substrate 1 is, as shown in FIG. 4, preferably a cordierite monolith substrate having a honeycomb structure. The interior of the substrate 1 is partitioned into multiple cells by partition walls 11. A gas passage 5 is formed in each cell. As shown in FIG. 3, the lower catalyst layer 2 is formed on the surface of the partition walls 11 that define a cell, while the front upper catalyst layer 3 and the rear upper catalyst layer 4 are formed on the upstream side and the downstream side of the surface of the lower catalyst layer 2.

The invention is described below through examples, but the invention is not limited to or by the scope of the examples.

### [Reference Example 1]

As shown in FIG. 1, NH₃ can be eliminated by an NH₃ oxidation reaction on a Pt group-containing catalyst, but NOx is also produced as a by-product. The complete oxidation of NH₃ (conversion to N₂ and H₂O) is difficult, and the NOx produced by the NH₃ oxidation reaction is preferably reduced by an SCR reaction with NH₃.

### [Example 1] 1. Production of a slurry (A) that contains an NOx reduction catalyst, for production of the lower catalyst layer

A Cu-loaded SAPO-34 powder was dispersed in pure water, and an Al sol at 5 to 10 weight% of the SAPO-34 as the solids fraction was introduced as a binder and stirring was carried out. This was followed by the generation of a uniform particle size by milling.

### 2. Production of a slurry (B) that contains an NOx reduction catalyst, for production of the front upper catalyst layer

A Cu-loaded SAPO-34 powder was dispersed in pure water, and an Al sol at 5 to 10 weight% of the SAPO-34 as the solids fraction was introduced as a binder and stirring was carried out. This was followed by the generation of a uniform particle size by milling.

### 3. Production of a slurry (C) that contains an oxidation catalyst, for production of the rear upper catalyst layer

A Pt-loaded Al₂O₃ powder was dispersed in pure water, and an Al sol at 3 to 6 weight% of the Pt/Al₂O₃ powder as the solids fraction was introduced as a binder and stirring was carried out. This was followed by the generation of a uniform particle size by milling.

### 4. Coating of slurries (A) to (C) on the substrate

Slurry (A) is coated over the entire surface of the substrate. Slurry (B) is then zone-coated from the upstream side of the substrate over a target length. Finally, slurry (C) is zone-coated from the downstream side of the substrate.

The substrate has the honeycomb structure shown in FIG. 4 and is a cordierite cylinder with a diameter of 30 mm and a length of 50 mm. A lower catalyst layer 2 was formed by coating slurry (A) for lower catalyst layer production over the entire surface of the substrate 1, drying, and calcining. The front upper catalyst layer 3 was formed by coating slurry (B) for front upper catalyst layer production on the front region of the surface of the lower catalyst layer 2, drying, and calcining. The catalyst was obtained by coating slurry (C) for rear upper catalyst layer production on the rear region of the surface of the lower catalyst layer 2, drying, and calcining. The length of the rear upper catalyst layer 4 is 20 mm, which is a length that is 40% relative to the length of the lower catalyst layer 2. The length of the front upper catalyst layer 3 is 30 mm, which is a length that is 60% relative to the length of the lower catalyst layer 2.

The coating amount for the lower catalyst layer 2 is 30 g, which corresponds to 34.3 g/L when converted into the coating amount per 1 liter of substrate. The coating amount for the SAPO-34 in the lower catalyst layer 2 is 29.4 g/L per 1 liter of substrate.

The coating amount for the front upper catalyst layer 3 is 30 g, which corresponds to 34.3 g/L when converted into the coating amount per 1 liter of substrate. The coating amount for the SAPO-34 in the front upper catalyst layer 3 is 29.4 g/L per 1 liter of substrate.

The coating amount for the rear upper catalyst layer 4 is 30 g, which corresponds to 34.3 g/L when converted into the coating amount per 1 liter of substrate. The coating amount for the SAPO-34 in the rear upper catalyst layer 4 is 29.4 g/L per 1 liter of substrate.

### [Example 2]

A catalyst was obtained proceeding as in Example 1, with the exception that the length of the rear upper catalyst layer 4 relative to the length of the lower catalyst layer 2, as referenced in Example 1, was brought to 60%, while the length of the front upper catalyst layer 3 relative to the length of the lower catalyst layer 2 was brought to 40%.

The coating amount for the lower catalyst layer 2 is 30 g, which corresponds to 34.3 g/L when converted into the coating amount per 1 liter of substrate. The coating amount for the SAPO-34 in the lower catalyst layer 2 is 29.4 g/L per 1 liter of substrate.

The coating amount for the front upper catalyst layer 3 is 30 g, which corresponds to 34.3 g/L when converted into the coating amount per 1 liter of substrate. The coating amount for the SAPO-34 in the front upper catalyst layer 3 is 29.4 g/L per 1 liter of substrate.

The coating amount for the rear upper catalyst layer 4 is 30 g, which corresponds to 34.3 g/L when converted into the coating amount per 1 liter of substrate. The coating amount for the SAPO-34 in the rear upper catalyst layer 4 is 29.4 g/L per 1 liter of substrate.

### [Example 3]

A catalyst was obtained proceeding as in Example 1, with the exception that the length of the rear upper catalyst layer 4 relative to the length of the lower catalyst layer 2, as referenced in Example 1, was brought to 25%, while the length of the front upper catalyst layer 3 relative to the length of the lower catalyst layer 2 was brought to 75%.

The coating amount for the lower catalyst layer 2 is 30 g, which corresponds to 34.3 g/L when converted into the coating amount per 1 liter of substrate. The coating amount for the SAPO-34 in the lower catalyst layer 2 is 29.4 g/L per 1 liter of substrate.

The coating amount for the front upper catalyst layer 3 is 30 g, which corresponds to 34.3 g/L when converted into the coating amount per 1 liter of substrate. The coating amount for the SAPO-34 in the front upper catalyst layer 3 is 29.4 g/L per 1 liter of substrate.

The coating amount for the rear upper catalyst layer 4 is 30 g, which corresponds to 34.3 g/L when converted into the coating amount per 1 liter of substrate. The coating amount for the SAPO-34 in the rear upper catalyst layer 4 is 29.4 g/L per 1 liter of substrate.

### [Comparative Example 1]

A catalyst was obtained proceeding as in Example 1, with the following exceptions: slurry (B) was used for the rear upper catalyst layer; slurry (C) was used for the front upper catalyst layer; the length of the rear upper catalyst layer relative to the length of the lower catalyst layer was brought to 60%; and the length of the front upper catalyst layer relative to the length of the lower catalyst layer was brought to 40%.

The coating amount for the lower catalyst layer is 30 g, which corresponds to 34.3 g/L when converted into the coating amount per 1 liter of substrate. The coating amount for the SAPO-34 in the lower catalyst layer is 29.4 g/L per 1 liter of substrate.

The coating amount for the rear upper catalyst layer is 30 g, which corresponds to 34.3 g/L when converted into the coating amount per 1 liter of substrate. The coating amount for the SAPO-34 in the rear upper catalyst layer is 29.4 g/L per 1 liter of substrate.

The coating amount for the front upper catalyst layer is 30 g, which corresponds to 34.3 g/L when converted into the coating amount per 1 liter of substrate. The coating amount for the SAPO-34 in the front upper catalyst layer is 29.4 g/L per 1 liter of substrate.

The 50% ammonia decomposition temperature and the maximum NOx emission concentration were measured under the following conditions on the catalysts obtained in Examples 1 to 3 and Comparative Example 1. Gas composition:
CO₂=10%;
O₂ = 8%;
H₂O = 5%;
NH₃ = 300 ppm
temperature control: 500 to 100°C, cooling at 20°C/minute

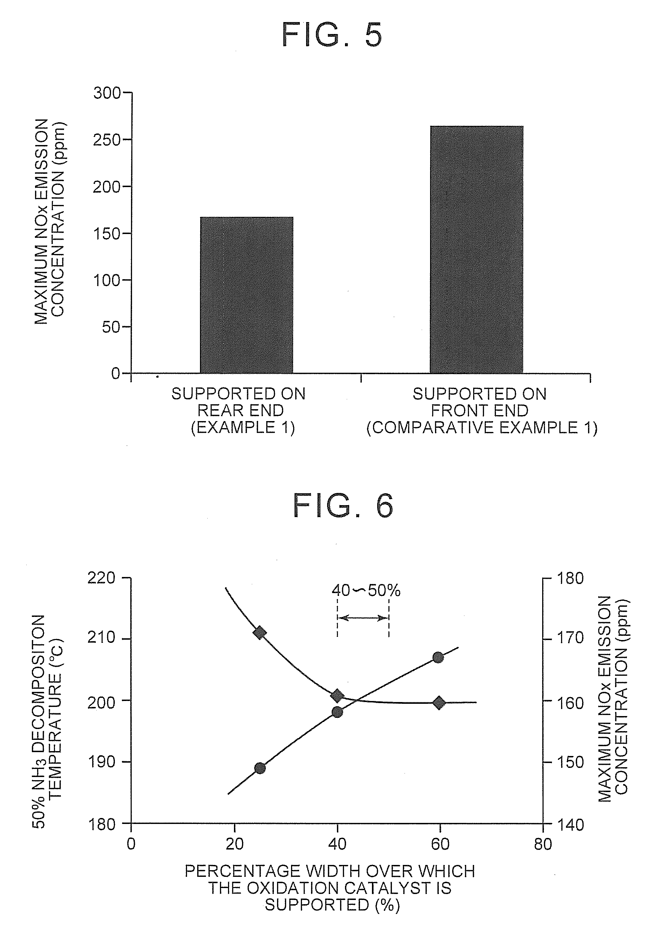

FIG. 5 is a graph that compares the maximum NOx emission concentration for the case in which the oxidation catalyst was zone-coated as the rear upper catalyst layer (Example 1) with the case in which the oxidation catalyst was zone-coated as the front upper catalyst layer (Comparative Example 1). As may be understood from FIG. 5, the catalyst of Example 1, in which the rear upper catalyst layer is executed as an oxidation catalyst, is superior in its reduction of the amount of NOx emission in comparison to the catalyst of Comparative Example 1, in which the front upper catalyst layer is executed as an oxidation catalyst.

FIG. 6 is a graph that shows the relationship, for the catalysts in Examples 1 to 3, between the percentage for the length of the rear upper catalyst layer relative to the length of the lower catalyst layer, and the 50% ammonia decomposition temperature and the maximum NOx emission concentration.

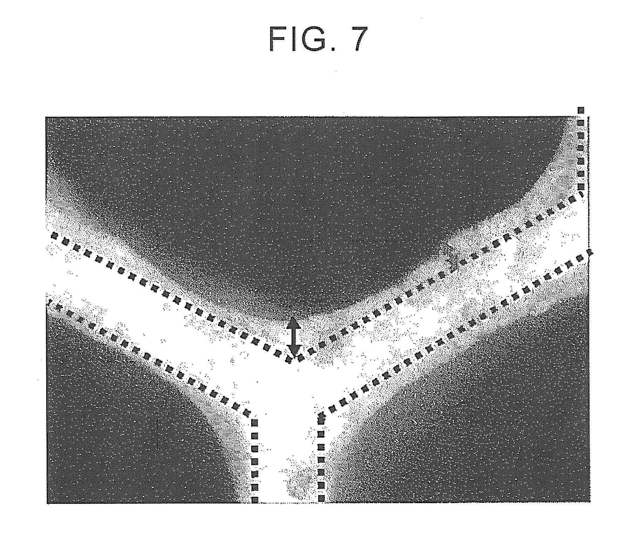

The results of observation of the catalyst coating layers of Example 1 using an optical microscope are shown in FIG. 7. In FIG. 7, the maximum thickness of the catalyst layer (the sum of the thicknesses of the upper catalyst layer and the lower catalyst layer) was 60 µm and the minimum thickness was 30 µm.

The catalyst according to the embodiments of the invention can be advantageously used in the exhaust gas control systems of internal combustion engines and in particular in the exhaust gas control systems of automotive internal combustion engines.

## Claims

1. An exhaust gas purification catalyst, comprising:
a substrate (1) that forms a gas passage through which an exhaust gas flows;
a lower catalyst layer (2) that is formed on a surface of the substrate;
a front upper catalyst layer (3) that coats an upstream side, in a direction of gas flow, of a surface of the lower catalyst layer; and
a rear upper catalyst layer (4) that coats the downstream side of the front upper catalyst layer, in the direction of gas flow, of the surface of the lower catalyst layer, **characterized in that**
the front upper catalyst layer (3) and the rear upper catalyst layer (4) are disposed adjacent to one another,
the lower catalyst layer (2) includes an NOx reduction catalyst,
the front upper catalyst layer (3) includes the NOx reduction catalyst, and
the rear upper catalyst layer (4) includes an oxidation catalyst.

2. The exhaust gas purification catalyst according to claim 1, wherein the front upper catalyst layer (3) and the lower catalyst layer (2) are formed integrally as a single body.

3. The exhaust gas purification catalyst according to claim 1 or 2, wherein a percentage for a length of the rear upper catalyst layer (4) relative to a length of the lower catalyst layer (2) is 20 to 70%.

4. The exhaust gas purification catalyst according to any one of claims 1 to 3, wherein a sum of thicknesses of the front upper catalyst layer (3) and the lower catalyst layer (2) is 20 to 70 µm.

5. The exhaust gas purification catalyst according to any one of claims 1 to 4, wherein a sum of thicknesses of the rear upper catalyst layer (4) and the lower catalyst layer (2) is 20 to 70 µm.

6. The exhaust gas purification catalyst according to any one of claims 1 to 5, wherein at least one precious metal selected from Pt and Pd is supported on a first support formed of a first porous body in the oxidation catalyst.

7. The exhaust gas purification catalyst according to any one of claims 1 to 6, wherein at least one selection from Cu and Fe is supported on a second support formed of a second porous body in the NOx reduction catalyst.
